# EUROPÄISCHE PATENTSCHRIFT

(11) **EP 4 413 344 B1**
(45) Veröffentlichungstag und Bekanntmachung des Hinweises auf die Patenterteilung: **18.06.2025**
(21) Anmeldenummer: 22755165.2
(22) Anmeldetag: 25.07.2022
(51) Int. Cl.: G01M 3/20

(54) **AUTOMATISIERTES LECKDETEKTIONSVERFAHREN UNTER VERWENDUNG EINES ROBOTISCHEN SCHNÜFFELLECKSUCHERS**
AUTOMATED LEAK DETECTION METHOD USING A ROBOTIC SNIFFER LEAK DETECTOR
PROCÉDÉ DE DÉTECTION DE FUITE AUTOMATISÉ UTILISANT UN DÉTECTEUR DE FUITE DE RENIFLEUR ROBOTISÉ

(30) Priorität: 07.10.2021 DE 102021126030
(43) Veröffentlichungstag der Anmeldung: 14.08.2024
(73) Patentinhaber: Inficon GmbH, 50968 Köln (DE)
(72) Erfinder: WETZIG, Daniel, 50968 Köln (DE); DECKER, Silvio, 50968 Köln (DE); PUCHALLA-KÖNIG, Jochen, 50968 Köln (DE); ROLFF, Erik, 50968 Köln (DE); TRIEB, Volker, 50968 Köln (DE)
(74) Vertreter: dompatent von Kreisler Selting Werner - Partnerschaft von Patent- und Rechtsanwälten mbB
(86) Internationale Anmeldenummer: PCT/EP2022/070813
(87) Internationale Veröffentlichungsnummer: WO 2023/057107

(56) Entgegenhaltungen:
- WO-A1-2010/028619
- DE-A1- 102012 008 857
- DE-A1- 102016 226 152
- DE-A1- 102018 206 877
- DE-A1- 4 140 725

## Beschreibung

Die Erfindung betrifft einen Leckdetektor zur Detektion von Lecks an einem Prüfobjekt.

Ein Leckdetektor ist z.B. in DE 10 2005 022 156 A1 (Inficon) beschrieben. Dieser Leckdetektor umfasst eine Sonde, deren Schnüffelspitze an vorbestimmten Prüfregionen eines Prüfobjekts platziert wird. Das Prüfobjekt ist mit einem Prüfgas, z.B. Helium, gefüllt. Über die Schnüffelspitze wird austretendes Prüfgas von einer Basiseinheit angesaugt und einem Prüfgasdetektor zugeführt, der z.B. als Massenspektrometer ausgebildet sein kann.

Bei Verwendung von Leckdetektoren wird das Prüfobjekt, z.B. eine Klimaanlage oder das Kühlaggregat eines Kühlschranks, mit einem Prüfgas gefüllt, und es kann mit einer Schnüffelsonde detektiert werden, ob Prüfgas aus dem Prüfobjekt austritt. Bei einer Qualitätsprüfung von Produkten in der Industrie wird die Schnüffelspitze auf spezifische Prüfbereiche des Prüfobjekts aufgebracht, in denen in Möglichkeit besteht, dass ein Leck vorhanden ist. Dabei wird die Sonde manuell zu den Prüfbereichen bewegt. Bei diesem Prozess ist es schwierig, zu prüfen, ob die Schnüffelspitze zu sämtlichen relevanten Prüfbereichen der Prüfobjekte bewegt worden ist. Eine Bedienungsperson kann unbeabsichtigt bestimmte Prüfbereiche auslassen oder andere Prüfbereiche überspringen, die sie in ihrer subjektiven Beurteilung als unkritisch ansieht.

U.S.-Patent Nr. 4,945,305 (Ascension) beschreibt ein Positionsbestimmungssystem, das einen Sender zum Erzeugen eines gepulsten DC-Magnetfelds und einen Empfänger, der auf dem Objekt angeordnet ist, aufweist. Dieses Verfahren eignet sich besonders zum Bestimmen einer aktuellen Position, Vergleichen derselben mit einer gewünschten Position und für ein Feedback. Es wird keine Störung durch nichtmagnetische Objekte in der Sichtlinie zwischen dem Sender und dem Empfänger verursacht. Eine Reststörung durch große Massen von magnetisierbarem Material, wie z.B. einem Kompressorblock und einer Kühlmaschine, kann durch Kalibrieren eliminiert werden, da die zu prüfende Anordnung statisch ist. Dieses Verfahren hat sich als besonders sinnvoll für die Realisierung der Offenbarung herausgestellt.

WO 2009/016160 A1 beschreibt einen Leckdetektor, der eine Basiseinheit aufweist, die über ein Rohr mit einer Sonde verbunden ist. Die Schnüffelspitze wird auf Prüfzonen oder Prüfbereichen des Prüfobjekts positioniert. In dem Fall, in dem Prüfgas aus dem Prüfobjekt austritt, wird dieses von einem Prüfgasdetektor in der Basiseinheit detektiert. Ein Positionsbestimmungssystem ist vorgesehen, das einen Sender, einen Empfänger, der in der Sonde angeordnet ist, und eine Zuführ- und Auswerteeinheit aufweist. Dadurch wird das Vorhandensein der Schnüffelspitze in den einzelnen Prüfbereichen überwacht und bestätigt.

Auf dem Gebiet der Automatisierung ist es bekannt, digitale Daten von physischen Objekten unter Verwendung eines 3D-Sensors zu erfassen, um dadurch eine Punktwolke in einem 3-dimensionalen virtuellen Raum zu erhalten, wobei die Punkte jeweils einen Oberflächenpunkt auf der Außenfläche des physischen Objekts darstellen. Roboter, die in der Automatisierungsindustrie verwendet werden, wie z.B. bei der automatisierten Herstellung von Produkten, wie z.B. Autos, werden von Software-Algorithmen gesteuert, bei denen die erfassten digitalen Daten verwendet werden. Dies erfolgt üblicherweise zum Sensieren des Außenumfangs oder von Flächen des gesamten physischen Objekts zum Lokalisieren, Ergreifen, Bewegen oder Umsetzen des Objekts oder zum Lackieren der Außenfläche des Objekts mittels eines Farbsprüh-Roboterarms, zum Beispiel in der Fahrzeugherstellungsindustrie.

Eine Schnüffel-Leckdetektion an Wärmetauschvorrichtungen, wie z.B. Kühlschränken, Klimaanlagen, Wärmepumpen etc., ist Teil der Qualitätsprüfung von Wärmetauschvorrichtungen. Eine menschliche Bedienungsperson muss die relevanten Prüfbereiche an dem Wärmetauscher, wie z.B. flüssigkeitsführenden Rohren, visuell identifizieren und die Sonde manuell nacheinander zu den Prüfbereichen bewegen. Diese Art der Schnüffel-Leckdetektion an Wärmetauschvorrichtungen ist zeitaufwendig und anfällig für Fehler, die durch den menschlichen Faktor verursacht werden, wie z.B. Auslassen von Prüfbereichen oder nicht ausreichendes Heranführen der Schnüffelsonde an einen Prüfbereich.

DE 10 2016 226 152 A1 offenbart ein Verfahren und eine Anlage zur Dichtheitsprüfung eines Behälters.

DE 10 2012 008 857 A1 offenbart ein Verfahren und eine Prüfanlage zur Dichtheitsprüfung einer Gaseinrichtung eines Kraftwagens.

DE 41 40 725 A1 offenbart ein Verfahren und eine Anordnung zur Dichtsheitsprüfung von Behältern, die in ihrem Innenraum mit einem Messfluid unter Druck beaufschlagt werden.

WO 2010/028619 A1 offenbart eine als Roboter ausgebildete Vorrichtung zur autonomen Ermittlung von Leckagen unter Stofffreisetzung ins Umfeld aus Rohrleitungssystemen.

Der Erfindung liegt die Aufgabe zugrunde, eine zuverlässigere und schnellere Detektion eines Lecks in einem fluidführenden Element einer Wärmetauschvorrichtung zu schaffen.

Das erfindungsgemäße Verfahren ist durch die Merkmale des unabhängigen Anspruchs 1 definiert.

Demnach wird die Sondenspitze einer von einem Roboter geführten Sonde an einen zu untersuchenden Prüfort unter Verwendung eines Roboters bewegt (Schritt a) und nach Erreichen des Prüfortes wird Gas bzw. Luft durch die Sondenspitze angesaugt und einem Gasdetektor zugeführt, mit dem ein Messsignal des angesaugten Gases aufgenommen wird (Schritt b). Zu mindestens einem ersten Zeitpunkt wird mindestens ein erster Messwert des Messsignals erfasst (Schritt c). Dabei saugt die Sondenspitze das Gas oder die Umgebungsluft typischerweise bereits beim Annähern an den Prüfort an und wird nicht erst nach Erreichen des Prüfortes aktiviert. Zudem wird der erste Messzeitpunkt erfasst und dem ersten Messwert zugeordnet (Schritt d). Schließlich wird auch noch eine dem ersten Messzeitpunkt entsprechende erste Messposition der Sonde erfasst (Schritt e). Es werden also Positionsdaten aufgenommen, die die Position einer Komponente der Sonde, beispielsweise der Sondenspitze, angeben, die die Komponente zu dem ersten Messzeitpunkt eingenommen hat. Jedem Signalwert I der Gasmessung wird also ein Zeitpunkt t der Messung und ein Ort oder eine Position im Raum (x,y,z) zugeordnet als I(t,x,y,z). Bei Bedarf können zusätzlich oder alternativ zu den Raumkoordinaten eines kartesischen Koordinatensystems Raumwinkelkoordinaten in Form zweier Raumwinkel Φ, Θ und eines Abstandes r (r, Φ, Θ) der Achse entlang der Sonde erfasst werden. Diese Schritte werden für mindestens einen nachfolgenden zweiten Messzeitpunkt wiederholt (Schritt f), wobei erfindungsgemäß die Messwerte mit den jeweiligen Messpositionen korreliert werden, um anhand der Messwerte beurteilen zu können, an welcher Messposition ein Extremwert des Messsignals, der auf ein mögliches Leck im Prüfling hindeuten könnte, erfasst wurde (Schritt g). Auf diese Weise soll eine vollautomatisierte Leckerkennung unter Verwendung eines Roboters erfolgen, ohne dass ein menschlicher Benutzer die Auswertung, Bedienung und/oder Lecksuche oder einzelne Schritte davon ausführt.

können die Schritte b) - g) wiederholt werden, nachdem die Sondenspitze von dem Roboter an einen anderen Prüfort bewegt wurde. Das Erfassen der Messposition der, zum Beispiel der Sondenspitze, erfolgt vorzugsweise mit einem 3D-Sensor, bei dem es sich um ein bildgebendes System mit mindestens einer optischen Kamera und vorzugsweise mindestens einer Beleuchtungseinrichtung handeln kann.

Während der Aufnahme des Messsignals kann die Sonde von dem Roboter bewegt werden, um kontinuierlich verschiedene Messpositionen während der Messung einzunehmen. Die Messwerte können als Funktion der Messposition der Sonde und/oder der Bewegungsgeschwindigkeit der Sonde erfasst werden. Vorzugsweise erfolgt die Auswertung des Messsignals in Abhängigkeit von der Messposition der Sondenspitze.

Vorteilhafterweise werden mindestens zwei Messungen an derselben Messposition durchgeführt und die aufgenommenen Messwerte miteinander verglichen.

Die Auswertung des Messignals kann unter Berücksichtigung der Geschwindigkeit erfolgen, mit der die Sonde während der Messung bewegt wird.

Während die Sonde an den Prüfort bewegt wird und bevor die Messung erfolgt, kann ein Nullabgleich des Sondensignals erfolgen, indem mit dem Gasdetektor ein Messsignal an einem Ort aufgenommen wird, an dem bekanntermaßen kein Prüfgas vorhanden ist und/oder eine konstante Hintergrundkonzentration vorliegt. Oder der Signal-Nullabgleich erfolgt auf dem Weg der Sondenspitze an den Prüfort heran, bei einem ausreichend großen Abstand zum Prüfort, so dass das Hintergrundsignal (Nullabgleich) ermittelt werden kann.

Eine Kalibration des Lecksuchsystems kann erfolgen, indem die Sonde an eine Stelle (z.B. Testleck) herangeführt wird, an der eine bekannte definierte Leckrate abgegeben wird.

Die Sonde kann an eine Messposition bewegt werden, für die bei einer vorangegangenen Messung ein Leck festgestellt oder vermutet wurde, um an der Messposition eine Kontrollmessung auszuführen.

Diejenigen Messpositionen, für die aus vorhergehenden Messungen Lecks vermutet werden, werden vorzugsweise markiert.

Die Förderrate des durch die Sonde aufgenommenen Gasstroms kann in Abhängigkeit von der Bewegungsgeschwindigkeit der Sonde angepasst werden.

Bei dem Gaslecksucher kann es sich beispielsweise um einen Schnüffellecksucher mit einer Schnüffelsonde handeln, die eine Schnüffelspitze aufweist, durch die das Gas angesaugt wird. Alternativ kann der Gaslecksucher eine Prüfgassonde aufweisen, in deren Detektorspitze der Gasdetektor für das Prüfgas enthalten ist.

Im Folgenden wird anhand der Figur ein Ausführungsbeispiel der Erfindung näher erläutert. Die Figur zeigt eine schematische Darstellung eines Leckdetektionssystems und eines Prüflings in Form einer Wärmetauschvorrichtung. Das dargestellte Ausführungsbeispiel zeigt einen Gaslecksucher in Form eines Schnüffellecksuchers, dessen Sonde eine Schnüffelsonde ist, durch deren Schnüffelspitze das zu analysierende Gas angesaugt wird.

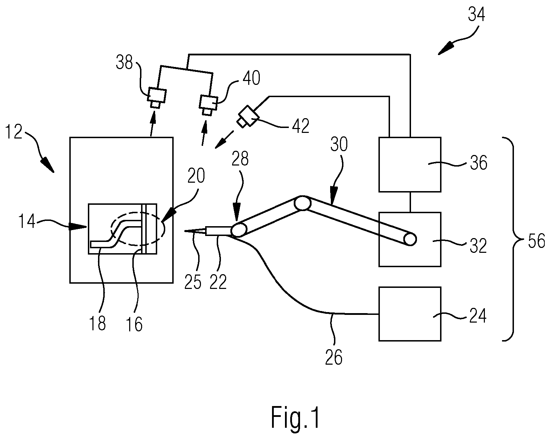

Fig. 1 zeigt eine Wärmetauschvorrichtung 12 in Form eines Kühlschranks. Der Ausdruck "Wärmetauschvorrichtung", wie er in der vorliegenden Offenbarung verwendet wird, bezieht sich auf Systeme oder Vorrichtungen, die einen Wärmetauscher, wie z.B. Kühlschränke, Klimaanlagen, Wärmepumpen etc., aufweisen. Die Wärmetauschvorrichtung weist auf ihrer unteren Rückseite 14 mehrere fluidführende Elemente 16, 18 in Form von Rohren auf, die während des Herstellungsprozesses auf der Rückseite des Kühlschranks angeschweißt oder gelötet werden. Als Teil einer vollautomatischen Qualitätskontrolle müssen besondere Prüfbereiche 20 zum Durchführen einer Leckdetektion in den Prüfbereichen 20 identifiziert werden. Ein Prüfbereich 20 wird als ein Bereich der Wärmetauschvorrichtung angesehen, in dem Rohre montiert, zusammengeschweißt oder zusammengelötet sind, in dem ein Rohr endet, in dem ein Rohr mit einem anderen Rohr verbunden ist oder in dem Rohre zusammengefügt sind oder einander kreuzen. Bei der in Fig. 1 gezeigten Ausführungsform ist ein erstes fluidführendes Element 16 vertikal angeordnet und ist ein zweites fluidführendes Element 18 mit einem seiner Enden mit dem ersten fluidführenden Element 16 verbunden. Der Bereich, in dem die Rohre 16, 18 verbunden sind, wird als Prüfbereich 20 angesehen und ist in Fig. 1 als gestrichelter Kreis gezeigt.

Hintergrund der Erfindung ist das automatische Bewegen einer Schnüffelsonde 22 eines Schnüffelleckdetektors 24 zu dem Prüfbereich 20, so dass die Schnüffelspitze 25 der Schnüffelsonde 22 nahe genug positioniert ist, um Gas anzusaugen, das aus einem möglichen Leck in einem der Rohre 16, 18 innerhalb des Prüfbereichs 20 austritt. Die Schnüffelsonde 22 ist über ein Verbindungsrohr oder Verbindungskapillare 26 auf herkömmliche Weise mit dem Gasleckdetektor 24 verbunden. Ziel ist dabei, die Bewegung der Schnüffelsonde und die zugehörige Signalreaktion des gemessenen Signals miteinander zu korrelieren.

Die Schnüffelsonde 22 ist an dem distalen Ende 28 eines Roboterarms 30 eines Roboters 32 montiert.

Ein 3D-Sensor 34 in Form eines Bildgebungssystems 36, das zwei optische Kameras 38, 40 und eine Beleuchtungsvorrichtung 42 in Form einer LED-Leuchte aufweist, erfasst digitale Bilddaten von der unteren Rückseite 14 der Wärmetauschvorrichtung 12. Die Beleuchtungsvorrichtung 42 beleuchtet auf allgemein bekannte Weise die Wärmetauschvorrichtung 12 und insbesondere die untere Rückseite 14 der Wärmetauschvorrichtung 12. Die Kameras 38, 40 erfassen das reflektierte Licht, und das Bilderzeugungssystem 36 erzeugt digitale Bilddaten, aus denen eine Punktwolke 44 in einem 3-dimensionalen virtuellen Raum 48 erfasst wird. Alternativ ist es möglich Position, die Position der Messsonde aus der bekannten Position des Roboterarms abzuleiten. Dabei wird der Roboterarm an bekannte Messpositionen geführt. Unter Kenntnis von Größe und Ausrichtung der Messsonde in Relation zu dem Roboterarm kann die Position der Messsonde ermittelt werden.

Erfindungsgemäß werden mit dem Gasdetektor 24 Messwerte des Messsignals eines durch die Schnüffelspitze 25 angesaugten Gasstromes aufgenommen und die jedem Messwert zugehörigen Messzeitpunkte erfasst und den Messwerten zugeordnet. Zudem werden zu jedem Messzeitpunkt die jeweiligen Messpositionen der Schnüffelspitze 25 erfasst, indem die Position der Schnüffelspitze, das heißt die relative Position der Schnüffelspitze 25 in Bezug auf den Prüfling 12 beziehungsweise den Messort 20 mit Hilfe der Kameras 38, 40 des 3D - Sensors 34 aufgenommen werden.

Bei der Auswertung der Messwerte werden diese mit den jeweiligen Messpositionen verglichen, um anhand der Messpositionen der jeweiligen Messwerte und anhand der Amplituden der Messwerte auf den Ort eines möglichen Lecks schließen zu können.

Ein typischer Fall einer notwendigen Signalkorrelation wird von der Verzögerung der Signalreaktion aufgrund der Laufzeit des Gases durch die Schnüffelleitung 26 verursacht. Nach dem Aufsaugen einer Prüfgaswolke in die Schnüffelspitze 25 durchläuft das Gas die Leitung 26 hin zum Hauptgerät des Gasdetektors 24. Diese Laufzeit, auch Totzeit genannt, kann bis zu einigen Sekunden betragen. Das bedeutet, dass die Schnüffelsonde 22 zum Zeitpunkt einer Signalreaktion am Gasdetektor 24, die durch eine aufgesogene Leckgaswolke an einem Messort verursacht wurde, vom Roboterarm 30 bereits an einen nächsten Messort bewegt worden sein kann. Bei der korrekten Zuordnung des Messsignals zum Messort muss diese Zeitverzögerung berücksichtigt werden.

Die Gasdurchlaufzeit muss hierzu zuvor gemessen werden. Dies kann z.B. während der Kalibration des Systems erfolgen. Der Roboterarm 30 positioniert dazu die Spitze 25 der Schnüffelsonde 22 vor einem Testleck. Hierbei wird die Verzögerungszeit zwischen dem Heranfahren an das Testleck und der Signalreaktion gemessen. Diese Verzögerungszeit wird anschließend bei der Interpretation der Signalreaktionen am Gasdetektor 24 und der Zuordnung der Leckstellen am Prüfling berücksichtigt.

## Patentansprüche

1. Automatisiertes Leckdetektionsverfahren unter Verwendung eines robotischen Gaslecksuchers (56),mit den Schritten:
a) Bewegen der Sondenspitze (25) einer von einem Roboter (32) geführten Sonde (22) an einen zu untersuchenden Prüfort (20) unter Verwendung eines Roboters (32),
b) Aufnehmen eines Messignals von durch die Sondenspitze (25) aufgenommenem Gas mit einem Gasdetektor (24),
c) Erfassen mindestens eines ersten Messwerts des Messignals zu mindestens einem ersten Messzeitpunkt,
**gekennzeichnet durch** die Schritte:
d) Erfassen des ersten Messzeitpunkts und Zuordnen des ersten Messzeitpunkts zu dem ersten Messwert,
e) Erfassen und Zuordnen einer dem ersten Messzeitpunkt entsprechenden ersten Messposition der Sonde (22),
f) Wiederholen der Schritte a) - e) für mindestens einen nachfolgenden zweiten Messzeitpunkt,
g) Korrelieren der Messwerte mit den jeweiligen Messpositionen der Sonde (22), um anhand der Messwerte beurteilen zu können, an welcher Messposition ein Extremwert des Messsignals, der auf ein mögliches Leck im Prüfling hindeuten könnte, erfasst wurde.

2. Leckdetektionsverfahren nach Anspruch 1, **dadurch gekennzeichnet, dass** die Schritte b) - g) wiederholt werden, nachdem die Sondenspitze (25) von dem Roboter (32) an einen anderen Prüfort (20) bewegt wurde.

3. Leckdetektionsverfahren nach einem der vorhergehenden Ansprüche, **dadurch gekennzeichnet, dass** die Messposition der Sonde (22) gemäß Schritt e) mit einem 3D-Sensor erfasst wird.

4. Leckdetektionsverfahren nach einem der vorhergehenden Ansprüche, **dadurch gekennzeichnet, dass** die Messposition der Sonde (22) gemäß Schritt e) aus der bekannten Position des die Sonde tragenden Arms (30) des Roboters (32) abgeleitet wird.

5. Leckdetektionsverfahren nach einem der vorhergehenden Ansprüche, **dadurch gekennzeichnet, dass** die Sonde (22) von dem Roboter (32) während der Aufnahme des Messignals bewegt wird und dadurch kontinuierlich verschiedene Messpositionen einnimmt.

6. Leckdetektionsverfahren nach einem der vorhergehenden Ansprüche, **dadurch gekennzeichnet, dass** die Messwerte als Funktion der Messposition der Sonde (22) und/oder der Bewegungsgeschwindigkeit der Sonde (22) erfasst werden.

7. Leckdetektionsverfahren nach einem der vorhergehenden Ansprüche, **dadurch gekennzeichnet, dass** die Auswertung des Messignals in Abhängigkeit von der Messposition der Sondenspitze (25) erfolgt.

8. Leckdetektionsverfahren nach einem der vorhergehenden Ansprüche, **dadurch gekennzeichnet, dass** mindestens zwei Messungen an derselben Messposition durchgeführt werden und die aufgenommenen Messwerte mit einander verglichen werden.

9. Leckdetektionsverfahren nach einem der vorhergehenden Ansprüche, **dadurch gekennzeichnet, dass** die Auswertung des Messsignals unter Berücksichtigung der Geschwindigkeit erfolgt, mit der die Sonde (22) während der Messung bewegt wird.

10. Leckdetektionsverfahren nach einem der vorhergehenden Ansprüche, **dadurch gekennzeichnet, dass** während Schritt a) und vor Schritt b) eine Kalibrierung der Sonde (22) durch einen Nullabgleich erfolgt, indem mit dem Gasdetektor (24) ein Messignal aufgenommen und als Hintergrundsignal gespeichert wird.

11. Leckdetektionsverfahren nach einem der vorhergehenden Ansprüche, **dadurch gekennzeichnet, dass** die Sonde (22) an eine Messposition bewegt wird, für die zuvor ein Leck festgestellt wurde, um an der Messposition eine Kontrollmessung durchzuführen.

12. Leckdetektionsverfahren nach einem der vorhergehenden Ansprüche, **dadurch gekennzeichnet, dass** diejenigen Messpositionen, für die aus vorhergehenden Messungen Lecks vermutet werden, markiert werden.

13. Leckdetektionsverfahren nach einem der vorhergehenden Ansprüche, **dadurch gekennzeichnet, dass** die Förderrate des durch die Sonde (22) angesaugten Gasstroms in Abhängigkeit von der Bewegungsgeschwindigkeit der Sonde (22) angepasst wird.

14. Leckdetektionsverfahren nach einem der vorhergehenden Ansprüche, **dadurch gekennzeichnet, dass** es sich bei dem Gaslecksucher um einen Schnüffelllecksucher, bei der Sonde um eine Schnüffelsonde und bei der Sondenspitze um eine Schnüffelspitze handelt.

## Claims

1. An automated leak detection method using a robotic gas leak detector (56), the method comprising the steps of:
a) moving the probe tip (25) of a probe (22) guided by a robot (32) to a test site (20) to be examined, using a robot (32);
b) recording a measurement signal from gas recorded by the probe tip (25) by means of a gas detector (24);
c) detecting at least one first measurement value of the measurement signal at at least one first measurement time;
**characterized by** the steps of:
d) detecting the first measurement time and assigning the first measurement time to the first measurement value;
e) detecting and assigning a first measurement position of the probe (22) corresponding to the first measurement time;
f) repeating steps a) - e) for at least one subsequent second measurement time;
g) correlating the measurement values with each of the measurement positions of the probe (22) in order to be able to use the measurement values to assess at which measurement position an extreme value of the measurement signal, which could indicate a possible leak in the test object, was detected.

2. The leak detection method according to claim 1, **characterized in that** steps b) - g) are repeated after the robot (32) has moved the probe tip (25) to another test location (20).

3. The leak detection method according to any one of the preceding claims, **characterized in that** according to step e), the measurement position of the probe (22) is detected using a 3D sensor.

4. The leak detection method according to any one of the preceding claims, **characterized in that** according to step e), the measurement position of the probe (22) is inferred from the known position of the arm (30) of the robot (32) carrying the probe.

5. The leak detection method according to any one of the preceding claims, **characterized in that** the probe (22) is moved by the robot (32) during the acquisition of the measurement signal and thereby continuously assumes different measurement positions.

6. The leak detection method according to any one of the preceding claims, **characterized in that** the measurement values are acquired as a function of the measurement position of the probe (22) and/or the movement speed of the probe (22).

7. The leak detection method according to any one of the preceding claims, **characterized in that** the evaluation of the measurement signal is performed in dependence on the measurement position of the probe tip (25).

8. The leak detection method according to any one of the preceding claims, **characterized in that** at least two measurements are performed at the same measurement position and the acquired measurement values are compared with each other.

9. The leak detection method according to any one of the preceding claims, **characterized in that** the evaluation of the measurement signal is performed with consideration to the speed at which the probe (22) is moved during the measurement.

10. The leak detection method according to any one of the preceding claims, **characterized in that** during step a) and before step b), a calibration of the probe (22) by a zero adjustment is performed by acquiring a measurement signal by means of the gas detector (24) and storing the same as a background signal.

11. The leak detection method according to any one of the preceding claims, **characterized in that** the probe (22) is moved to a measurement position for which a leak was determined before, so as to perform a control measurement at the measurement position.

12. The leak detection method according to any one of the preceding claims, **characterized in that** those measurement positions are marked for which leaks are assumed from previous measurements.

13. The leak detection method according to any one of the preceding claims, **characterized in that** the feed rate of the gas flow drawn in by the probe (22) is adjusted in dependence on the movement speed of the probe (22).

14. The leak detection method according to any one of the preceding claims, **characterized in that** the gas leak detector is a sniffer leak detector, the probe is a sniffer probe and the probe tip is a sniffer tip.

## Revendications

1. Procédé de détection de fuite automatisé utilisant un détecteur de fuite renifleur robotisé (56) avec les étapes de :
a) déplacer la tête de sonde (25) d'une sonde (22) guidée par un robot (32) vers un lieu d'inspection (20) à examiner, en utilisant un robot (32),
b) saisir un signal de mesure d'un gaz pris par la tête de sonde (25), moyennant un détecteur de gaz (24),
c) saisir au moins une première valeur de mesure du signal de mesure à au moins un premier instant,
**caractérisé par** les étapes :
d) saisir le premier instant de mesure et attribuer le premier instant de mesure à la première valeur de mesure,
e) saisir et attribuer une première position de mesure de la sonde (22) correspondant au premier instant de mesure,
f) répéter les étapes a) à e) pour au moins un deuxième instant de mesure suivant,
g) corréler les valeurs de mesure avec les positions de mesure respectives de la sonde (22) afin de pouvoir évaluer, moyennant les valeurs de mesure, dans quelle position de mesure une valeur extrême du signal de mesure a été saisie qui pourrait être indicative d'une fuite possible dans l'objet à examiner.

2. Procédé de détection de fuite selon la revendication 1, **caractérisé en ce que** les étapes b) à g) sont répétées après que la tête de sonde (25) a été déplacé par le robot (32) à un autre lieu (20) à examiner.

3. Procédé de détection de fuite selon l'une des revendications précédentes, **caractérisé en ce que** la position de mesure de la sonde (22) est saisie selon l'étape e) par un capteur 3D.

4. Procédé de détection de fuite selon l'une des revendications précédentes, **caractérisé en ce que** la position de mesure de la sonde (22) selon l'étape e) est dérivée de la position connue du bras (30) du robot (32) portant la sonde.

5. Procédé de détection de fuite selon l'une des revendications précédentes, **caractérisé en ce que** la sonde (22) est déplacée par le robot (32) pendant la saisie du signal de mesure et prend ainsi continuellement différentes positions de mesure.

6. Procédé de détection de fuite selon l'une des revendications précédentes, **caractérisé en ce que** les valeurs de mesure sont saisies comme étant fonction de la position de mesure de la sonde (22) et/ou de la vitesse de déplacement de la sonde (22).

7. Procédé de détection de fuite selon l'une des revendications précédentes, **caractérisé en ce que** l'exploitation du signal de mesure est effectuée en fonction de la position de mesure de la tête de sonde (25).

8. Procédé de détection de fuite selon l'une des revendications précédentes, **caractérisé en ce qu'**au moins deux mesures sont effectuées dans la même position de mesure et que les valeurs de mesure saisies sont comparées l'une à l'autre.

9. Procédé de détection de fuite selon l'une des revendications précédentes, **caractérisé en ce que** l'exploitation du signal de mesure est effectuée en tenant compte de la vitesse avec laquelle la sonde (22) est déplacée pendant l'action de mesurer.

10. Procédé de détection de fuite selon l'une des revendications précédentes, **caractérisé en ce que**, pendant l'étape a) et avant l'étape b), un calibrage de la sonde (22) est effectué moyennant un réglage du zéro en saisissant un signal de mesure avec le détecteur de gaz (24) et en l'enregistrant en tant que signal de fond.

11. Procédé de détection de fuite selon l'une des revendications précédentes, **caractérisé en ce que** la sonde (22) est déplacée à une position de mesure à laquelle, précédemment, une fuite à été constatée, afin d'effectuer une mesure de contrôle à la position de mesure.

12. Procédé de détection de fuite selon l'une des revendications précédentes, **caractérisé en ce que** les positions de mesure sont marquées auxquelles, à partir de mesures précédentes, des fuites sont supposées.

13. Procédé de détection de fuite selon l'une des revendications précédentes, **caractérisé en ce que** le débit du flux de gaz aspiré par la sonde (22) est adapté en fonction de la vitesse de déplacement de la sonde (22).

14. Procédé de détection de fuite selon l'une des revendications précédentes, **caractérisé en ce que** le détecteur de fuite de gaz est un détecteur de fuite renifleur, la sonde est une sonde renifleuse et la tête de sonde est une tête renifleuse.
